# EUROPÄISCHE PATENTANMELDUNG

(11) **EP 4 079 441 A1**
(43) Veröffentlichungstag der Anmeldung: **26.10.2022**
(21) Anmeldenummer: 21020225.5
(22) Anmeldetag: 21.04.2021
(51) Int. Cl.: B23K 20/12, B23K 20/227, B23K 20/08, B23K 20/02

(54) **ÜBERGANGSBAUTEIL UND VERFAHREN ZUR HERSTELLUNG DES ÜBERGANGSBAUTEILS**

(71) Anmelder: Linde GmbH, 82049 Pullach (DE)
(72) Erfinder: Aigner, Herbert, Reut-Taubenbach (DE); Englert, Thomas, Gilching (DE)
(74) Vertreter: Meilinger, Claudia Sabine

(57) **Zusammenfassung**

Die Erfindung betrifft ein Übergangsbauteil (1, 2) zur Verbindung von Bauteilen einer chemischen oder verfahrenstechnischen Anlage, wobei das Übergangsbauteil (1, 2) ein erstes Materialstück (100) aus einem ersten Material und ein zweites Materialstück (200) aus einem zweiten Material aufweist, wobei das erste Material (100) und das zweite Material (200) nicht durch Schmelzschweißen miteinander verbindbar sind, wobei zur Verbindung des ersten Materialstücks (100) mit dem zweiten Materialstück (200) mindestens eine metallische Zwischenschicht (300) vorhanden ist, wobei die mindestens eine metallische Zwischenschicht (300) auf das erste Materialstück (100) und/oder auf das zweite Materialstück (200) aufgebracht ist, wobei das erste Materialstück (100) mittels Reibschweißen über die mindestens eine metallische Zwischenschicht (300) mit dem zweiten Materialstück (200) verbunden ist, sowie ein Verfahren zur Herstellung des Übergangsbauteils.

## Beschreibung

Die Erfindung betrifft ein Übergangsbauteil zur Verbindung von Bauteilen einer chemischen oder verfahrenstechnischen Anlage, wobei das Übergangsbauteil ein erstes Materialstück aus einem ersten Material und ein zweites Materialstück aus einem zweiten Material aufweist, wobei das erste Material und das zweite Material nicht durch Schmelzschweißen miteinander verbindbar sind, und ein Verfahren zur Herstellung des Übergangsbauteils.

### Stand der Technik

In zahlreichen Anwendungen, insbesondere kryogenen Anlagen, beispielsweise kryogenen Wärmetauschern zur Verflüssigung von Gasen, oder kryogenen Behältern oder Kryopumpen ist es notwendig, z.B. zur Bereitstellung von Fluiddichtigkeit Bauteile, wie etwa Rohre, insbesondere aus unterschiedlichen Werkstoffen, miteinander zu verbinden, insbesondere zu verschweißen.

Beispielsweise wird zur Verbindung eines Aluminiumrohres mit einem Stahlrohr ein Übergangsbauteil (engl. Transition Joint) verwendet, welches einen Aluminiumabschnitt, an dem das Aluminiumrohr befestigt, insbesondere verschweißt, werden kann, und einen Stahlabschnitt, an dem das Stahlrohr befestigt, insbesondere verschweißt, werden kann, aufweist. Um den Aluminiumabschnitt des Übergangsbauteils mit dem Stahlabschnitt des Übergangsbauteils fluiddicht zu verbinden, werden beispielsweise verschiedene Übergangsschichten aus Metall, beispielsweise aus Titan oder aus einer Titanlegierung, aus Kupfer, aus Nickel oder aus einer Kupfer-Nickel-Legierung, in mehreren Schritten mittels Sprengplattieren zwischen dem Aluminiumabschnitt und dem Stahlabschnitt angeordnet. Dieses Herstellungsverfahren ist einerseits sehr aufwendig. Andererseits werden die Übergangsschichten aus Metall durch das Sprengplattieren physisch sehr beansprucht, wodurch die Übergangsschichten spröde oder brüchig werden können. Insbesondere bei kryogenen Anlagen, bei denen das Übergangsbauteil von kryogenem Fluid durchströmt wird, kühlt das kryogene Fluid das Übergangsbauteil ab. Die Übergangsschichten werden somit ebenfalls abgekühlt und ziehen sich durch die Abkühlung zusammen. Diese zusätzlichen Kräfte können dazu führen, dass die spröden Übergangsschichten beschädigt oder zerstört werden, wodurch das Übergangsbauteil undicht wird.

Darüber hinaus müssen der Aluminiumabschnitt sowie der Stahlabschnitt des Übergangsbauteils mit einer ausreichenden Wanddicke ausgestaltet sein, so dass diese bei der Sprengplattierung nicht durch die von der Sprengung erzeugten Kräfte beschädigt und/oder spröde werden. Typischerweise werden Aluminium- und Stahlabschnitte verwendet, die im Vergleich zu der Wanddicke des Aluminium- oder Stahlrohres die dreifache bis vierfache Wanddicke aufweisen.

Ziel der vorliegenden Erfindung ist es, ein stabiles und fluiddichtes Übergangsbauteil mit einer zumindest reduzierten spröden Übergangsschicht und mit einer reduzierten Wanddicke, sowie ein Verfahren zur Herstellung des Übergangsbauteils bereitzustellen.

### Offenbarung der Erfindung

Erfindungsgemäß wird ein Übergangsbauteil sowie ein Verfahren zur Herstellung des Übergangsbauteils mit den Merkmalen der jeweiligen unabhängigen Patentansprüche vorgeschlagen. Vorteilhafte Ausgestaltungen sind Gegenstand der Unteransprüche sowie der nachfolgenden Beschreibung.

Das erfindungsgemäße Übergangsbauteil zur Verbindung von Bauteilen einer chemischen oder verfahrenstechnischen Anlage, insbesondere kryogene Anlage, weist ein erstes Materialstück aus einem ersten Material und ein zweites Materialstück aus einem zweiten Material auf, wobei das erste Material und das zweite Material nicht durch Schmelzschweißen miteinander verbindbar sind.

Das Übergangsbauteil bzw. das erste Materialstück und das zweite Materialstück weisen insbesondere eine Form eines Hohlkörpers, insbesondere eine Torusform, Ringform oder Kreiszylinderform, mit einer radial innenliegenden Innenseite und einer radial außenliegenden Außenseite auf. Das Übergangsbauteil ist geeignet, mit Rohren der chemischen oder verfahrenstechnischen Anlage verbunden zu werden, wobei die Form des Übergangsbauteils bevorzugt an die Form der Rohre angepasst ist.

Zur Verbindung des ersten Materialstücks mit dem zweiten Materialstück ist mindestens eine metallische Zwischenmetallschicht vorhanden, wobei die mindestens eine metallische Zwischenschicht auf das erste Materialstück und/oder auf das zweite Materialstück aufgebracht ist.

Das erste Materialstück ist ferner mittels Reibschweißen über die mindestens eine metallische Zwischenschicht mit dem zweiten Materialstück verbunden. Beim Reibschweißen wird das erste Materialstück relativ zum zweiten Materialstück bewegt. Die mindestens eine metallische Zwischenschicht, die auf dem ersten Materialstück und/oder auf dem zweiten Materialstück aufgebracht ist, schmilzt durch eine durch das Reibschweißen erzeugte Wärme und verbindet beim Abkühlen das erste Materialstück mit dem zweiten Materialstück. Beim Abkühlen ordnen sich die Metallatome der mindestens einen geschmolzenen Zwischenschicht neu an und es bildet sich mittels Rekristallisierung eine feste metallische Zwischenschicht. Aus dem Stand der Technik bekannte Defekte, die beispielsweise durch Aufbringen der mindestens einen metallischen Zwischenschicht, z.B. durch Sprengschweißen, in der metallischen Zwischenschicht erzeugt wurden, können so durch das Rekristallisieren reduziert bzw. behoben werden.

Vorteilhafterweise ist zur Verbindung des ersten Materialstücks mit dem zweiten Materialstück mindestens ein Halteelement vorhanden. Das mindestens eine Halteelement besteht aus dem ersten Material und erstreckt sich formschlüssig ausgehend vom ersten Materialstück in das zweite Materialstück und/oder besteht aus dem zweiten Material und erstreckt sich formschlüssig ausgehend vom zweiten Materialstück in das erste Materialstück.

Das mindestens eine Haltelement, das beispielsweise am ersten Materialstück angebracht ist, wird beim Reibschweißen ebenfalls in das zweite Materialstück eingerieben. Je nach Art des Materials kann das mindestens eine Halteelement dabei in festem Zustand verbleiben oder zumindest zum Teil geschmolzen werden und sorgt so für eine zusätzliche Verbindung zwischen dem ersten Materialstück und dem zweiten Materialstück.

Das mindestens eine Halteelement hält einerseits das erste Materialstück und das zweite Materialstück fluiddicht zusammen. Andererseits sorgt ein das Übergangsbauteil durchströmendes kryogenes Fluid dazu, dass das Übergangsbauteil sowie das mindestens eine Halteelement deutlich abgekühlt werden, wobei sich insbesondere das mindestens eine Halteelement zusammenzieht.

Wenn sich das mindestens eine Halteelement zusammenzieht, übt das mindestens eine Halteelement eine Zugkraft aus, wobei das erste Materialstück und das zweite Materialstück aufeinander zu bewegt werden. Während bei einem Übergangsbauteil im Stand der Technik durch die Abkühlung des Übergangsbauteils bzw. der Übergangsschichten das Risiko besteht, dass die Übergangsschichten beschädigt oder zerstört werden, sorgt eine Abkühlung bei dem erfindungsgemäßen Übergangsbauteil für eine zusätzliche Abdichtung zwischen dem ersten Materialstück und dem zweiten Materialstück.

Das mindestens eine Halteelement weist bevorzugt eine dreidimensionale Struktur auf. Die dreidimensionale Struktur sorgt einerseits dafür, dass das mindestens eine Halteelement besser in das erste Materialstück und/oder das zweite Materialstück eingerieben werden kann und in das erste Materialstück und/oder das zweite Materialstück eingreift bzw. mit diesem verzahnt, da die dreidimensionale Struktur den Eingriff bzw. das Verzahnen zwischen dem mindestens einen Halteelement und dem ersten Materialstück und/oder dem zweiten Materialstück vergrößert. Andererseits führt die dreidimensionale Struktur dazu, dass das mindestens eine Halteelement eine ausreichende Dicke bzw. Materialstärke aufweist, so dass Kräfte, wie beispielsweise Zug- oder Scherkräfte, das mindestens eine Halteelement nicht beschädigen oder zerstören können.

Die dreidimensionale Struktur des mindestens einen Halteelements weist bevorzugt eine halbkugelförmige Struktur, eine zylindrische Struktur oder kegelförmige Struktur, gegebenenfalls mit aufgebrachten Konturen, auf. Ferner kann die dreidimensionale Struktur zusätzlich ein Gewinde aufweisen, beispielsweise ein selbstschneidendes Gewinde oder ein mehrgängiges Gewinde. Aufgrund seiner Form greift das mindestens eine Halteelement formschlüssig in das erste Materialstück und/oder das zweite Materialstück ein. Eine derartige Verbindung ist unlösbar und hält das erste Materialstück und das zweite Materialstück zusammen, so dass ein stabiles Übergangsbauteil entsteht.

Es versteht sich, dass das mindestens eine Halteelement zusätzlich zu den oben genannten Formen weitere geeignete Formen (z.B. eine Tannenbaum- oder Konturkegelgeometrie) aufweisen kann, die in der Lage sind, in das erste Materialstück und/oder das zweite Materialstück formschlüssig einzugreifen.

Vorteilhafterweise ist die mindestens eine metallische Zwischenschicht auf dem mindestens einen Halteelement aufgebracht. Diese führt, wie oben erwähnt, zu einer stabileren Verbindung zwischen dem ersten Materialstück und dem zweiten Materialstück.

Vorteilhafterweise ist das erste Material Stahl oder rostfreier Stahl und das zweite Material Aluminium oder eine Aluminiumlegierung. Insbesondere in kryogenen Anlagen, beispielsweise kryogenen Wärmetauschern zur Verflüssigung von Gasen, oder kryogenen Behältern oder Kryopumpen, werden häufig Stahlrohre und Aluminiumrohre verwendet. Aluminium und Stahl (bzw. deren Legierungen) lassen sich nicht verschweißen. Das Übergangsbauteil ist somit geeignet, einen Übergang zwischen einem Stahlrohr und einem Aluminiumrohr zu schaffen, wobei der Übergang durch die mindestens eine metallische Zwischenschicht und ferner durch das mindestens eine Halteelement fluiddicht gehalten wird.

Vorteilhafterweise weist die mindestens eine metallische Zwischenschicht Kupfer, Nickel, Titan, Silber oder Tantal auf. Es kann dabei eine metallische Zwischenschicht oder eine Kombination von mehreren metallischen Zwischenschichten zwischen dem ersten Materialstück aus Stahl und dem zweiten Materialstück aus Aluminium angeordnet sein. Geeignete Kombinationen sind beispielsweise Nickel und Titan oder Nickel und Kupfer. Die metallischen Zwischenschichten können dabei zusammen übereinander auf das erste Materialstück oder das zweite Materialstück oder jeweils eine metallische Zwischenschicht auf eines der beiden Materialstücke aufgebracht sein.

In einer Ausführungsform ist beispielsweise zwischen dem ersten Materialstück aus Stahl und dem zweiten Materialstück aus Aluminium eine Silberschicht als metallische Zwischenschicht angeordnet. Da der Schmelzpunkt von Stahl über 1500°C und der Schmelzpunkt von Aluminium bei ca. 660°C liegt, ist hier vorteilhaft, die Silberschicht, die einen Schmelzpunkt von ca. 930°C aufweist, auf das erste Materialstück aus Stahl aufzubringen. Bei der anschließenden Verbindung mittels Reibverschweißen wird die Silberschicht gegen das zweite Materialstück gerieben und schmilzt dort. Es ist darüber hinaus auch möglich, einen Grenzbereich des zweiten Materialstücks aus Aluminium, gegen den die Silberschicht beim Reibschweißen bewegt wird, zumindest zum Teil ebenfalls zu schmelzen. Die Silberschicht und der Grenzbereich des zweiten Materialstücks können sich dabei zumindest zum Teil vermischen und bilden bei Abkühlung eine Art Legierung aus, durch die die Verbindung des ersten Materialstücks mit dem zweiten Materialstück stabil und fluiddicht realisiert werden kann.

Vorteilhafterweise ist die mindestens eine metallische Zwischenschicht mittels Diffusionsschweißen, Reibschweißen, Sprengschweißen oder additiv aufgebracht.

Beim Diffusionsschweißen werden beispielsweise die metallische Zwischenschicht und das jeweilige Materialstück unter Hochvakuum auf die erforderliche Temperatur erwärmt und anschließend einem Pressdruck, beispielsweise mittels eines Pressstempels, ausgesetzt. Die sich kontaktierenden Materialoberflächen verbinden sich dabei durch einen Stofftransport über die Kontaktfläche zwischen den Materialoberflächen hinaus. Da die Diffusionsrate von der vorherrschenden Temperatur abhängig ist, wird das Diffusionsschweißen im Bereich von 50% bis 90% der Schmelztemperatur der zu fügenden Materialien durchgeführt. Vorteil dieser Methode ist, dass die Materialien nicht geschmolzen werden müssen, um eine Verbindung zu realisieren. Ein weiterer Vorteil ist, dass Materialstücke für das Übergangsbauteil verwendet werden können, die eine geringe Wanddicke aufweisen. Dadurch kann insgesamt Material eingespart und die Übergangsbauteile kostengünstiger hergestellt werden.

Bei der additiven Fertigung der metallischen Zwischenschicht auf dem jeweiligen Materialstück wird beispielsweise das Material der metallischen Zwischenschicht, z.B. in Form eines Drahtes, geschmolzen. Bekannte Methoden nutzen dazu beispielsweise einen Laser, einen Lichtbogen oder einen Elektronenstrahl, um den Draht zu schmelzen. Das geschmolzene Material wird anschließend auf das jeweilige Materialstück aufgebracht und dort abgekühlt. Vorteil dieser Methode ist, dass die Schichtdicke je nach Menge des aufgebrachten geschmolzenen Materials sehr präzise eingestellt werden kann. Auch hier können Materialstücke mit geringeren Wanddicken verwendet werden, so dass Herstellungskosten reduziert werden können.

Beim Reibschweißen wird beispielsweise ein Ring aus einem Metall, das die metallische Zwischenschicht bilden soll, relativ zu dem jeweiligen Materialstück bewegt, so dass der Ring durch die durch die Reibung entstehende Wärme geschmolzen wird. Beim Abkühlen bildet das geschmolzene Metall anschließend auf dem jeweiligen Materialstück die metallische Zwischenschicht. Auch hier kann durch Wahl der Ringdicke beispielsweise die Schichtdicke der metallischen Zwischenschicht präzise eingestellt werden. Ferner können auch bei dieser Methode Materialstücke mit geringeren Wanddicken verwendet werden, so dass Herstellungskosten reduziert werden können.

Beim Sprengschweißen wird mindestens eine Metallschicht über dem jeweiligen Materialstück angeordnet und dann mittels Sprengung in Richtung des Materialstücks beschleunigt. Beim Auftreffen der mindestens einen Metallschicht verbindet sich die Metallschicht mit dem jeweiligen Materialstück und führt zu einer metallischen Schicht auf dem Materialstück. Im Gegensatz zu den drei oben beschriebenen Methoden müssen hier Materialstücke verwendet werden, die eine größere Wanddicke haben, so dass die durch die Sprengung verursachten Kräfte das jeweilige Materialstück nicht beschädigen.

Da die mindestens eine metallische Zwischenschicht ferner beim Reibschweißen zur Verbindung des ersten Materialstücks mit dem zweiten Materialstück geschmolzen und anschließend beim Abkühlen rekristallisiert wird, können zumindest Defekte, die durch das Sprengschweißen in der Zwischenschicht erzeugt wurden und beispielsweise zu einer spröden Zwischenschicht führen, zumindest zum Teil behoben oder korrigiert werden. Eine so erzeugte metallische Zwischenschicht führt im Vergleich zum Stand der Technik zu einer fluiddichteren und stabileren metallischen Zwischenschicht.

Vorteilhafterweise weist das Übergangsbauteil mindestens ein Messelement auf. Das mindestens eine Messelement kann eine Temperatur und/oder eine Längenveränderung des mindestens einen Halteelements und/oder des Übergangsbauteils messen. Auf Grund der Messung der Temperatur und/oder der Längenveränderung des mindestens einen Halteelements und/oder des Übergangsbauteils kann auf die Fluiddichtigkeit geschlossen werden.

Das mindestens eine Messelement dient im Allgemeinen dazu, das Übergangsbauteil zu überwachen und beispielsweise eine Fehlfunktion des Übergangsbauteils zu erkennen oder eine maximale Lebensdauer des Übergangsbauteils zu bestimmen.

Fließt beispielsweise ein kryogenes Fluid durch das Übergangsbauteil, kühlt sich die Innenseite des Übergangsbauteils ab. Es besteht somit ein Temperaturunterschied zwischen einer Innenseite und einer Außenseite des Übergangsbauteils. Sollte ein Temperaturmesselement, das beispielsweise an der Außenseite des Übergangsbauteils, angeordnet ist, eine Temperatur messen, die annähernd oder gleich der Temperatur des kryogenen Fluids ist, könnte dies darauf schließen lassen, dass das Übergangsbauteil undicht ist und kryogenes Fluid austritt.

Ferner könnte ein Messelement, das die Längenveränderung messen kann und das beispielsweise an dem mindestens einen Halteelement angeordnet ist, feststellen, dass das mindestens eine Halteelement eine Längenzunahme erfährt. Diese Längenzunahme könnte darauf schließen lassen, dass das Halteelement durch Zugkräfte auseinandergezogen bzw. gedehnt wird, oder das Halteelement in zwei Teile zerbrochen ist, wobei sich die beiden Teile voneinander entfernen. Beides würde dazu führen, dass das Übergangsbauteil undicht ist und kryogenes Fluid austritt.

Es versteht sich, dass das mindestens eine Messelement nur an bzw. in dem ersten Materialstück, nur an bzw. in dem zweiten Materialstück, nur an bzw. in der mindestens einen Zwischenmetallschicht nur an bzw. in dem mindestens einen Halteelement, in einem Grenzbereich zwischen dem erstem Materialstück und der mindestens einen metallischen Zwischenschicht, in einem Grenzbereich zwischen dem zweiten Materialstück und der mindestens einen metallischen Zwischenschicht oder in einem Grenzbereich zwischen der metallischen Zwischenschicht und dem mindestens einen Haltelement angeordnet sein kann. Es versteht sich ferner, dass auch weitere Messelemente verwendet werden können, wobei das Messelement entsprechend der bestimmten Anwendung des Übergangsbauteils gewählt werden kann. Erfindungsgemäß wird ferner ein Verfahren zur Herstellung eines Übergangsbauteils, wie oben beschrieben, offenbart. Das Verfahren umfasst das Bereitstellen (wie etwa das Herstellen) eines ersten Materialstücks aus einem ersten Material, das Bereitstellen eines zweiten Materialstücks aus einem zweiten Material, das Aufbringen mindestens einer metallischen Zwischenschicht auf das erste Materialstück und/oder auf das zweite Materiastück sowie das Verbinden des ersten Materialstücks mit dem zweiten Materialstück mittels Reibschweißen über die mindestens eine metallische Zwischenschicht.

Vorteilhafterweise wird ferner die mindestens eine metallische Zwischenschicht mittels Diffusionsschweißen, Reibschweißen, Sprengschweißen oder additiv aufgebracht.

Vorteilhafterweise wird ferner vor dem Aufbringen der mindestens einen metallischen Zwischenschicht auf das erste Materialstück und/oder auf das zweite Materialstück mindestens ein Halteelement an dem ersten Materialstück, wobei das mindestens eine Halteelement aus dem ersten Material gebildet wird, oder an dem zweiten Materialstück, wobei das mindestens eine Halteelement aus dem zweiten Material gebildet wird, ausgebildet.

Vorteilhafterweise wird ferner die mindestens eine metallische Zwischenschicht ferner auf dem mindestens einen Halteelement aufgebracht.

Vorteilhafterweise wird ferner das mindestens eine Halteelement, das an dem ersten Materialstück ausgebildet ist, beim Verbinden des ersten Materialstücks mit dem zweiten Materialstück mittels Reibschweißen in das zweite Materialstück gerieben oder das mindestens eine Halteelement, das an dem zweiten Materialstück ausgebildet ist, beim Verbinden des ersten Materialstücks mit dem zweiten Materialstück mittels Reibschweißen in das erste Materialstück eingerieben.

Vorteilhafterweise wird mindestens ein Messelement an und/oder in dem Übergangsbauteil angeordnet.

Ein derart hergestelltes Übergangsbauteil entspricht dem Übergangsbauteil gemäß einem der oben beschriebenen Ausführungsformen, so dass auf eine erneute Beschreibung verzichtet wird.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf Zeichnungen beschrieben.

### Figurenbeschreibung

Figur 1 zeigt schematisch eine bevorzugte Ausführungsform eines erfindungsgemäßen Übergangsbauteils in einer Längsschnittansicht.
Figur 2 zeigt schematisch eine weitere bevorzugte Ausführungsform eines erfindungsgemäßen Übergangsbauteils in einer Längsschnittansicht.

Identische Bezugszeichen in den Figuren bezeichnen gleiche oder baugleiche Elemente und werden nicht jedes Mal gesondert erläutert.

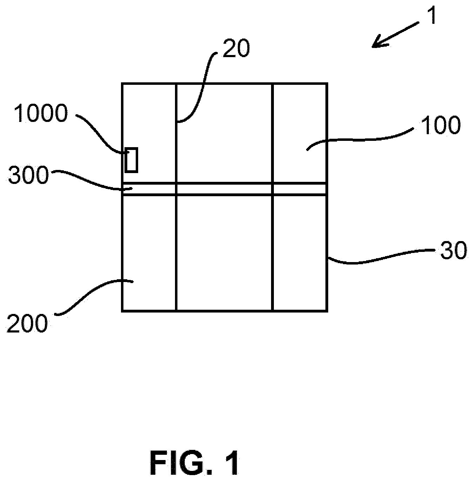

In Figur 1 ist schematisch eine bevorzugte Ausführungsform eines erfindungsgemäßen Übergangsbauteils in einer Längsschnittansicht gezeigt und insgesamt mit 1 bezeichnet.

Das Übergangsbauteil 1 weist ein erstes Materialstück 100 und ein zweites Materialstück 200 auf. Das erste Materialstück 100 besteht aus Stahl und das zweite Materialstück 200 besteht aus Aluminium. Das Übergangsbauteil 1 bzw. das erste Materialstück 100 und das zweite Materialstück 200 weisen eine Hohlzylinderform mit einer radial innenliegenden Innenseite 20 und einer radial außenliegenden Außenseite 30 auf.

Ferner weist das Übergangsbauteil 1 eine metallische Zwischenschicht 300 auf. Die metallische Zwischenschicht 300 ist hier Kupfer und ist zwischen dem ersten Materialstück 100 und dem zweiten Materialstück 200 angeordnet. In alternativen Ausführungsformen kann die metallische Zwischenschicht beispielsweise auch aus Nickel, Titan, Silber oder Tantal sein. Darüber hinaus ist es möglich, zwei oder mehr metallische Zwischenschichten übereinander anzuordnen. Beispielsweise können vorteilhafte Kombinationen Stahl/Nickel/Titan/Aluminium oder Stahl/Nickel/Kupfer/Aluminium sein.

Das Übergangsbauteil 1 dient dazu, beispielsweise in einer kryogenen Anlage ein Stahlrohr mit einem Aluminiumrohr zu verbinden. Dazu wird das Stahlrohr mit dem aus Stahl bestehenden ersten Materialstück 100 und das Aluminiumrohr mit dem aus Aluminium bestehenden zweiten Materialstück 200 verbunden, insbesondere verschweißt. Das Übergangsbauteil 1 ist dabei in der Lage, das kryogene Fluid von dem einen Rohr, z.B. Stahlrohr, in das andere Rohr, z.B. Aluminiumrohr, zu leiten. Da das erste Materialstück 100 nicht mit dem zweiten Materialstück 200 mittels Schmelzschweißen nicht verbunden werden kann, dient die metallische Zwischenschicht 300 dazu, das erste Materialstück 100 mit dem zweiten Materialstück 200 zu verbinden. Dazu wird die metallische Zwischenschicht 300 in dieser Ausführungsform additiv auf das erste Materialstück 100 aufgebracht und mittels Reibschweißen in das zweite Materialstück 200 eingerieben. Dabei schmilzt die metallische Zwischenschicht 300 durch die bei der Reibung entstehende Wärme. Wird die metallische Zwischenschicht 300 abgekühlt, rekristallisiert diese aus und bildet eine unlösbare, fluiddichte Verbindung zwischen dem ersten Materialstück 100 und dem zweiten Materialstück 200.

Auf Grund der fluiddichten Verbindung des ersten Materialstücks 100 mit dem zweiten Materialstück 200 über die metallische Zwischenschicht 300 ist die Verbindung unlösbar und dicht, so dass kein kryogenes Fluid auslaufen kann. Durch das additive Aufbringen der metallischen Zwischenschicht 300 auf das erste Materialstück 100 und das anschließende Reibschweißen zur Verbindung des ersten Materialstücks 100 mit dem zweiten Materialstück 200 kann im Vergleich zum Stand der Technik ferner eine Wanddicke des ersten Materialstücks und/oder des zweiten Materialstücks reduziert und insgesamt dünner ausgebildet werden. Das führt dazu, dass bei der Herstellung des Übergangsbauteils 1 benötigtes Material eingespart und somit das Übergangsbauteil 1 kostengünstiger hergestellt werden kann.

Ferner ist möglich, dass zumindest ein Teil des zweiten Materialstücks 200 beim Reibschweißen ebenfalls geschmolzen wird. Die geschmolzene metallische Zwischenschicht 300 und der geschmolzene Teil des zweiten Materialstücks 200 können in geschmolzenem Zustand zumindest zum Teil ineinander diffundieren und eine Legierung bilden. Auch diese Legierung kristallisiert beim Abkühlen aus und bildet ebenfalls eine unlösbare und fluiddichte Verbindung zwischen dem ersten Materialstück 100 und dem zweiten Materialstück 200.

Das Übergangsbauteil 1 weist zudem ein Messelement 1000 auf, das in der Lage ist, die Temperatur zu messen. Das Temperaturmesselement 1000 ist in dem ersten Materialstück 100 derart angeordnet, dass es in der Nähe der Außenseite 30 positioniert ist. Ferner ist das Temperaturmesselement 1000 relativ nah an einem Grenzbereich angeordnet, wobei der Grenzbereich einen Bereich darstellt, in dem das erste Materialstück 100 an die metallische Zwischenschicht 300 angrenzt.

Fließt beispielsweise ein kryogenes Fluid durch das Übergangsbauteil 1, kühlt sich die Innenseite 20 des Übergangsbauteils 1 ab. Es besteht somit ein Temperaturunterschied zwischen der Innenseite 20 und der Außenseite 30 des Übergangsbauteils 1. Sollte das Temperaturmesselement 1000 eine Temperatur messen, die annähernd oder gleich der Temperatur des kryogenen Fluids ist, könnte dies darauf schließen lassen, dass das Übergangsbauteil 1 undicht ist und kryogenes Fluid austritt.

Das Messelement 100 kann alternativ auch in dem zweiten Materialstück 200, in der metallischen Zwischenschicht 300 oder in einem Grenzbereich zwischen zwei der Bauteile angeordnet sein.

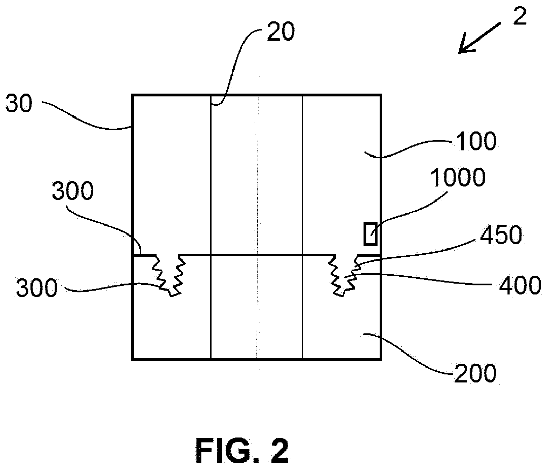

In Figur 2 ist schematisch eine weitere bevorzugte Ausführungsform eines erfindungsgemäßen Übergangsbauteils 2 in einer Längsschnittansicht gezeigt.

Das Übergangsbauteil 2 weist ebenfalls ein erstes Materialstück 100 aus Stahl und ein zweites Materialstück 200 aus Aluminium auf. Ferner weist das erste Materialstück 100 zwei Halteelemente 400 auf, wobei sich die Halteelemente 400 von dem ersten Materialstück 100 in das zweite Materialstück 200 formschlüssig erstreckt.

Die Halteelemente 400 bestehen hier ebenfalls aus Stahl. Die Halteelemente 400 weisen eine dreidimensionale Kegelform bzw. Schneidkegelform mit Gewinde, beispielsweise einem selbstschneidenden Gewinde, mit einer Vielzahl von Flanken 450 auf. Die Halteelemente 400 werden beispielsweise additiv an dem ersten Materialstück 100 ausgebildet und anschließend wird die metallische Zwischenschicht 300 auf dem ersten Materialstück 100 und den Halteelementen 400 aufgebracht, beispielsweise ebenfalls additiv. so dass die Halteelemente 400 mit der metallischen Zwischenschicht 300 beschichtet ist.

Anschließend kann das erste Materialstück 100 analog zum Übergangsbauteil 1 in das zweite Materialstück 200 mittels Reibschweißen eingerieben werden. Mit den mit der metallischen Zwischenschicht 300 beschichteten Flanken 450 des Schneidkegels reiben sich die Halteelemente 400 in das zweite Materialstück 200 ein und sind mit diesem derart verzahnt, dass die Halteelemente 400 sowie die metallische Zwischenschicht 300 unlösbar mit dem zweiten Materialstück 200 verbunden sind.

Analog zum Übergangsbauteil 1 kann beim Reibschweißen nur die metallische Zwischenschicht 300 und/oder zum Teil das erste Materialstück 200 schmelzen und beim Abkühlen eine unlösbare, fluiddichte Verbindung zwischen dem ersten Materialstück 100 und dem zweiten Materialstück 200 bilden.

Ferner ist möglich, dass beim Reibschweißen auch die Halteelemente 400 zum Teil schmelzen, so dass hier eine Legierung aus Materialien der metallischen Zwischenschicht 200, des zweiten Materialstücks 200 und/oder der Halteelemente 400 gebildet wird.

Ferner wird das Übergangsbauteil 2 bzw. die Halteelemente 400 beispielsweise von dem das Übergangsbauteil 2 durchfließenden kryogenen Fluid abgekühlt, wodurch sich die Halteelemente 400 zusammenziehen und das erste Materialstück 100 und das zweite Materialstück 200 aufeinander zu bewegen. Dies sorgt für eine zusätzliche Abdichtung zwischen dem ersten Materialstück 100 und dem zweiten Materialstück 200.

Es versteht sich, dass die metallische Zwischenschicht 300 in den bevorzugten Ausführungsformen gemäß Figur 1 und 2 auch mittels Diffusionsschweißen und Reibschweißen aufgebracht werden können, so dass die oben beschriebenen Vorteile zum Tragen kommen. Auch kann die metallische Zwischenschicht 300 mittels Sprengschweißen aufgebracht werden. Jedoch müssen das erste Materialstück 100 und/oder das zweite Materialstück 200 eine bestimmte Wanddicke aufweisen, so dass diese nicht durch die beim Sprengschweißen erzeugte Kraft zerstört oder verformt werden.

## Patentansprüche

1. Übergangsbauteil (1, 2) zur Verbindung von Bauteilen einer chemischen oder verfahrenstechnischen Anlage, wobei das Übergangsbauteil (1, 2) ein erstes Materialstück (100) aus einem ersten Material und ein zweites Materialstück (200) aus einem zweiten Material aufweist, wobei das erste Material und das zweite Material nicht durch Schmelzschweißen miteinander verbindbar sind,
wobei zur Verbindung des ersten Materialstücks (100) mit dem zweiten Materialstück (200) mindestens eine metallische Zwischenschicht (300) vorhanden ist, wobei die mindestens eine metallische Zwischenschicht (300) auf das erste Materialstück (100) und/oder auf das zweite Materialstück (200) aufgebracht ist, wobei das erste Materialstück (100) mittels Reibschweißen über die mindestens eine metallische Zwischenschicht (300) mit dem zweiten Materialstück (200) verbunden ist.

2. Übergangsbauteil (1, 2) nach Anspruch 1, wobei zur Verbindung des ersten Materialstücks (100) mit dem zweiten Materialstück (200) mindestens ein Halteelement (400) vorhanden ist, wobei das mindestens eine Halteelement (400) aus dem ersten Material besteht und sich ausgehend vom ersten Materialstück (100) in das zweite Materialstück (200) formschlüssig erstreckt und/oder das mindestens eine Halteelement (400) aus dem zweiten Material besteht und sich ausgehend vom zweiten Materialstück (200) in das erste Materialstück (100) formschlüssig erstreckt.

3. Übergangsbauteil (1, 2) nach Anspruch 2, wobei das mindestens eine Halteelement (400) eine dreidimensionale Struktur aufweist.

4. Übergangsbauteil (1, 2) nach Anspruch 3, wobei die dreidimensionale Struktur des mindestens einen Halteelements (400) eine halbkugelförmige Struktur, eine zylindrische Struktur oder eine kegelförmige Struktur aufweist.

5. Übergangsbauteil (1, 2) nach Anspruch 2 bis 4, wobei die mindestens eine metallische Zwischenschicht (300) auf dem mindestens einen Halteelement (400) aufgebracht ist.

6. Übergangsbauteil (1, 2) nach einem der vorstehenden Ansprüche, wobei das erste Material Stahl oder rostfreier Stahl und das zweite Material Aluminium oder eine Aluminiumlegierung ist.

7. Übergangsbauteil (1, 2) nach einem der vorstehenden Ansprüche, wobei die mindestens eine metallische Zwischenschicht (300) Kupfer, Nickel, Titan, Silber oder Tantal aufweist.

8. Übergangsbauteil (1, 2) nach einem der vorstehenden Ansprüche, wobei die mindestens eine metallische Zwischenschicht (300) mittels Diffusionsschweißen, Reibschweißen, Sprengschweißen oder additiv aufgebracht ist.

9. Übergangsbauteil (1, 2) nach einem der vorstehenden Ansprüche, wobei das Übergangsbauteil (1, 2) mindestens ein Messelement (1000) aufweist.

10. Übergangsbauteil (1, 2) nach Anspruch 9, wobei das Messelement (1000) eine Temperatur und/oder eine Längenveränderung des mindestens einen Halteelements (400) und/oder des Übergangsbauteils (1, 2) misst.

11. Verfahren zur Herstellung eines Übergangsbauteils (1, 2) nach einem der Ansprüche 1 bis 10, wobei das Verfahren umfasst:
- Bereitstellen eines ersten Materialstücks (100) aus einem ersten Material;
- Bereitstellen eines zweiten Materialstücks (200) aus einem zweiten Material;
- Aufbringen mindestens einer metallischen Zwischenschicht (300) auf das erste Materialstück (100) und/oder auf das zweite Materialstück (200);
- Verbinden des ersten Materialstücks (100) mit dem zweiten Materialstück (200) mittels Reibschweißen über die mindestens eine metallische Zwischenschicht (300).

12. Verfahren nach Anspruch 11, wobei die mindestens eine metallische Zwischenschicht (300) mittels Diffusionsschweißen, Reibschweißen, Sprengschweißen oder additiv aufgebracht wird.

13. Verfahren nach Anspruch 11 oder 12, wobei vor dem Aufbringen der mindestens einen metallischen Zwischenschicht (300) auf das erste Materialstück (100) und/oder auf das zweite Materialstück (200) mindestens ein Halteelement (400) an dem ersten Materialstück (100), wobei das mindestens eine Halteelement (400) aus dem ersten Material gebildet wird, oder an dem zweiten Materialstück (200), wobei das mindestens eine Halteelement (400) aus dem zweiten Material gebildet wird, ausgebildet wird.

14. Verfahren nach Anspruch 13, wobei die mindestens eine metallische Zwischenschicht (300) ferner auf dem mindestens einen Halteelement (400) aufgebracht wird.

15. Verfahren nach Anspruch 13 oder 14, wobei das mindestens eine Halteelement (400), das an dem ersten Materialstück (100) ausgebildet ist, beim Verbinden des ersten Materialstücks (100) mit dem zweiten Materialstück (200) mittels Reibschweißen in das zweite Materialstück (200) gerieben wird oder wobei das mindestens eine Halteelement (400), das an dem zweiten Materialstück (200) ausgebildet ist, beim Verbinden des ersten Materialstücks (100) mit dem zweiten Materialstück (200) mittels Reibschweißen in das erste Materialstück (100) eingerieben wird.

16. Verfahren nach einem der Ansprüche 11 bis 15, wobei mindestens ein Messelement an und/oder in dem Übergangsbauteil (1, 2) angeordnet wird.
